# EUROPEAN PATENT APPLICATION

(11) **EP 4 794 083 A1**
(43) Date of publication of application: **19.08.2026**
(21) Application number: 25824496.1
(22) Date of filing: 17.03.2025
(51) Int. Cl.: H01M 50/244, H01M 50/264, H01M 50/256, H01M 50/289, H01M 50/247

(54) **BATTERY ASSEMBLY AND ELECTRICAL APPARATUS**

(30) Priority: 25.06.2024 CN 202410830662
(71) Applicant: Zhuhai Cosmx Power Co., Ltd., Zhuhai, Guangdong 519180 (CN)
(72) Inventor: WANG, Dewei, Zhuhai, Guangdong 519180 (CN); ZONG, Yanzhen, Zhuhai, Guangdong 519180 (CN); LUO, Zihao, Zhuhai, Guangdong 519180 (CN)
(74) Representative: Elzaburu S.L.P.
(86) International application number: PCT/CN2025/082917
(87) International publication number: WO 2026/001101

(57) **Abstract**

The present application relates to the technical field of batteries, and in particular to a battery assembly and an electrical apparatus. The battery assembly includes: a battery, including a top surface, a bottom surface, and side surfaces; and a separation structure wrapped around an outer side of the battery, the separation structure including a first conductive layer and an insulating separation layer. The first conductive layer covers at least part of the bottom surface of the battery and at least part of the side surfaces of the battery. The insulating separation layer includes a separation main body portion and a pulling portion connected to the separation main body portion. A tear guide structure is provided between the separation main body portion and the pulling portion, the separation main body portion covers the first conductive layer and is connected to the first conductive layer, and the pulling portion is bonded to the top surface of the battery. The pulling portion is configured such that, when a pulling force is applied to the pulling portion, the pulling portion is separated from the top surface of the battery, and the first conductive layer on the side surfaces of the battery is exposed at the battery. At least part of the insulating separation layer is formed of a conductive release adhesive. The technical solution provided in the present application can effectively solve the problem in the related art of the battery being difficult to remove from a battery compartment.

## Description

### TECHNICAL FIELD

The present application relates to the technical field of batteries, and in particular to a battery assembly and an electrical apparatus.

### BACKGROUND

A battery is an apparatus that converts external energy into electrical energy and stores the electrical energy therein, and is widely applied in portable electronic devices such as mobile phones, tablet computers, and laptop computers.

In the related art, the battery can be fixed in a mounting groove of a battery compartment by means of a double-sided adhesive tape to prevent the battery from shaking in the mounting groove.

Although such a fixing method is simple, difficulty may be encountered when the battery is removed. Due to the strong adhesive force of the double-sided adhesive tape, a relatively large force is required to remove the battery, thereby reducing the replacement efficiency of the battery. In addition, when the battery is removed, a packaging film of the battery may be damaged, thereby affecting the reuse of the battery.

### SUMMARY

The present application provides a battery assembly and an electrical apparatus, to solve the problem in the related art of a battery being difficult to remove from a battery compartment during replacement of the battery of the electrical apparatus.

In one aspect, the present application provides a battery assembly, including:
a battery including a top surface, a bottom surface, and a plurality of side surfaces located between the top surface and the bottom surface; and
a separation structure wrapped around an outer side of the battery, the separation structure including a first conductive layer and an insulating separation layer,
where the first conductive layer covers at least part of the bottom surface of the battery and at least part of the side surfaces of the battery;
the insulating separation layer includes a separation main body portion and a pulling portion connected to the separation main body portion, a tear guide structure being provided between the separation main body portion and the pulling portion, the separation main body portion covering the first conductive layer and being connected to the first conductive layer, and the pulling portion being bonded to the top surface of the battery;
the pulling portion is configured such that, when a pulling force is applied to the pulling portion, the pulling portion is separated from the top surface of the battery, and the first conductive layer on the side surfaces of the battery is exposed at the battery; and
at least part of the insulating separation layer is formed of a conductive release adhesive.

In some embodiments, a tear guide structure is provided between the separation main body portion and the pulling portion, the pulling portion being configured such that, when a pulling force is applied to the pulling portion, the pulling portion is separated from the separation main body portion along the tear guide structure, and the first conductive layer located on the side surfaces of the battery is exposed at the top surface of the battery.

In some embodiments, the pulling portion includes a first edge and a second edge disposed opposite to each other in a first direction, and the tear guide structure includes a first tear guide portion and a second tear guide portion; a first end of the first tear guide portion is located at the first edge, and a second end of the first tear guide portion extends to a respective side surface of the battery; and a first end of the second tear guide portion is located at the second edge, and a second end of the second tear guide portion extends to a respective side surface of the battery.

In some embodiments, the second end of the second tear guide portion extends toward the second end of the first tear guide portion and is spaced apart from the second end of the first tear guide portion, where the first direction is a width direction of the battery.

In some embodiments, the tear guide structure includes a tear line, and the structural strength of the insulating separation layer at the tear line is less than the structural strength of the insulating separation layer outside the tear line.

In some embodiments, the first conductive layer includes a first main conductive portion and a first extended conductive portion. The first main conductive portion covers at least part of the bottom surface of the battery, and the first extended conductive portion covers the side surfaces of the battery. The first extended conductive portion includes a first extended strip and a first connecting portion for connecting the first extended strip to the first main conductive portion, a length of the first connecting portion in the first direction is smaller than a length of the first extended strip in the first direction, and the pulling portion is arranged at an end of the first extended strip away from the first connecting portion.

In some embodiments, the insulating separation layer further includes an insulating protective layer. The insulating protective layer and the conductive release adhesive are connected to each other and jointly form the insulating separation layer. The connection between the conductive release adhesive and the insulating protective layer is located on the bottom surface of the battery. The insulating protective layer includes an insulating protective main body portion and a pull tab arranged on the insulating protective main body portion. The insulating protective main body portion and the pull tab are connected via the tear guide structure, the pull tab forms the pulling portion of the insulating separation layer, and the insulating protective main body portion and the conductive release adhesive form the separation main body portion.

In some embodiments, the conductive release adhesive covers a bottom surface of the first conductive layer and abuts against or overlaps with the insulating protective layer located on the bottom surface.

In some embodiments, the battery includes a plurality of edges, the first main conductive portion is provided with a plurality of edges corresponding to the edges of the battery, the area of the first main conductive portion is smaller than the bottom area of the battery, and a gap is provided between each edge of the first main conductive portion and a corresponding edge of the battery.

In some embodiments, the separation structure further includes a second conductive layer. The second conductive layer covers the insulating separation layer located on the bottom surface of the battery and the insulating separation layer located on the side surfaces of the battery.

In some embodiments, the second conductive layer includes a second main conductive portion and a second extended conductive portion. The second main conductive portion covers the insulating separation layer located on the bottom surface of the battery, and the second extended conductive portion covers the insulating separation layer located on the side surfaces of the battery; and
the second extended conductive portion includes a second extended strip and a second connecting portion connecting the second extended strip and the second main conductive portion. A length of the second connecting portion in a first direction is smaller than a length of the second extended strip in the first direction, the pulling portion and the second connecting portion are staggered in the first direction, and the pulling portion is bonded to the second extended strip,
where the first direction is a width direction of the battery.

In another aspect, the present application provides an electrical apparatus, including a battery compartment and a battery assembly arranged in the battery compartment. The battery assembly is a battery assembly described above, where the battery compartment is made of a conductive material, and the first conductive layer of the battery assembly is arranged between the insulating separation layer and the battery compartment.

In another aspect, the present application provides an electrical apparatus, including a battery compartment and a battery assembly arranged in the battery compartment. The battery assembly is a battery assembly described above, where the battery compartment is made of an insulating material, and a third adhesive layer is provided between the second conductive layer of the battery assembly and the battery compartment.

The battery assembly provided in the present application includes the battery and the separation structure. The separation structure includes the first conductive layer and the insulating separation layer. The first conductive layer covers at least part of the bottom surface and at least part of the side surfaces of the battery. The insulating separation layer includes the separation main body portion and the pulling portion connected to the separation main body portion, where the separation main body portion can cover the first conductive layer. That is, the separation main body portion can cover the first conductive layer located on the bottom surface of the battery and the first conductive layer located on the side surfaces of the battery. The pulling portion is bonded to the top surface of the battery. Since the pulling portion is connected to the separation main body portion via the tear guide structure, when a pulling force is applied to the pulling portion, the pulling portion is separated from the top surface of the battery first. As the pulling force continues to be applied, the pulling portion can be peeled off from the side surfaces of the battery, thereby separating the first conductive layer on the side surfaces of the battery from the battery. In this case, a connecting terminal of an external power supply can extend into the space between the first conductive layer and the battery so as to be in contact with the first conductive layer, thereby achieving the electrical conduction between the external power supply and the first conductive layer. Moreover, the other terminal of the external power supply may be connected to the conductive battery compartment. Since the insulating separation layer is located between the first conductive layer and the battery compartment, and at least part of the insulating separation layer is formed of the conductive release adhesive, a potential difference can be generated between two sides of the conductive release adhesive, thereby causing the conductive release adhesive to lose its adhesiveness. An operator can remove the battery with the first conductive layer from the battery compartment. Even if the first conductive layer is damaged, the structure of the battery will not be affected, thereby ensuring the integrity of the battery.

Moreover, since the first conductive layer only covers the bottom surface and the side surfaces of the battery and does not cover the top surface of the battery, the overall thickness of the battery assembly is reduced, thereby ensuring miniaturization design of the battery assembly.

### BRIEF DESCRIPTION OF DRAWINGS

The accompanying drawings listed herein are incorporated into and constitute a part of the description, illustrate embodiments consistent with the present application, and together with the description serve to explain the principles of the present application.
FIG. 1 is a structural schematic view of a battery assembly according to an embodiment of the present application.
FIG. 2 is a structural schematic enlarged view of part A of the battery assembly in FIG. 1.
FIG. 3 is a structural schematic perspective view of the battery assembly in FIG. 1.
FIG. 4 is a structural schematic view of the assembly of a battery and a first conductive layer of the battery assembly in FIG. 1.
FIG. 5 is a structural schematic perspective view of an insulating separation layer of the battery assembly in FIG. 1.
FIG. 6 is a structural schematic expanded view of the insulating separation layer in FIG. 5.
FIG. 7 is a structural schematic expanded view of the battery assembly in FIG. 1.
FIG. 8 is a structural schematic perspective view of the battery assembly in FIG. 1, where FIG. 8 illustrates a structural schematic view with a pulling portion peeled off from a top surface of the battery.
FIG. 9 is a perspective structural schematic view of the battery assembly in FIG. 1, where FIG. 9 illustrates a structural schematic view after the pulling portion is torn along a tear guide structure.
FIG. 10 is a structural schematic view of the battery assembly in FIG. 9 from another viewing angle.
FIG. 11 is a structural schematic view with the battery assembly in FIG. 1 connected to an external power supply.
FIG. 12 is a structural schematic view of a battery assembly according to another embodiment of the present application.
FIG. 13 is a structural schematic perspective view of the battery assembly in FIG. 12.
FIG. 14 is a perspective structural schematic view of the battery assembly in FIG. 12, where FIG. 14 illustrates a structural schematic view after the pulling portion is torn along a tear guide structure.
FIG. 15 is a structural schematic view with the battery assembly in FIG. 12 connected to an external power supply.

### Reference signs:

100. battery; 110. top surface; 120. bottom surface; 130. side surface;
200. separation structure;
300. first conductive layer; 301. gap; 310. first main conductive portion; 320. first extended conductive portion; 321. first extended strip; 322. first connecting portion;
400. insulating separation layer; 401. separation main body portion; 402. pulling portion; 410. conductive release adhesive; 420. insulating protective layer; 421. insulating protective main body portion; 422. pull tab; 423. tear guide structure; 4231. first tear guide portion; 4232. second tear guide portion;
510. first adhesive layer; 520. second adhesive layer; 530. third adhesive layer;
600. second conductive layer; 610. second main conductive portion; 620. second extended conductive portion; 621. second extended strip; 622. second connecting portion;
700. battery compartment;
800. external power supply.

### DESCRIPTION OF EMBODIMENTS

To make the objectives, technical solutions, and advantages of the present application clearer, the technical solutions in the embodiments of the present application will be clearly and completely described below with reference to the accompanying drawings of the embodiments of the present application. Apparently, the embodiments described are some of, rather than all of, the embodiments of the present application. All other embodiments obtained by a person of ordinary skill in the art based on the embodiments of the present application without creative efforts shall fall within the scope of protection of the present application.

A method for fixing a battery in a battery compartment is directly related to the convenience of battery replacement, maintenance difficulty, space occupation, and the safety of the battery. In the related art, there are mainly two methods for fixing the battery: fixing the battery by means of a detachable connection structure, and fixing the battery by means of non-detachable bonding.

The provision of a detachable structure for the battery and the battery compartment facilitates replacement and maintenance of the battery. However, such a structure usually occupies more space because additional connecting components, such as clamps or fasteners, are required. This may adversely affect the miniaturization design of a device. In addition, frequent dismounting and mounting may cause wear of the connecting components, thereby reducing their durability. For the non-detachable connection between the battery and the battery compartment, a double-sided adhesive is used to directly bond the battery to the battery compartment. Such an arrangement can save space, increase the capacity of the battery, and ensure the miniaturization design of an electrical apparatus. However, since the double-sided adhesive has strong adhesiveness, it is difficult for a user or maintenance personnel to remove the battery, and a relatively large force is required to remove the battery. As a result, the battery is prone to damage, which is detrimental to the reuse of the battery and also affects the efficiency of battery replacement.

In order to improve the smoothness of battery removal, a solution in which a conductive release adhesive is used to bond the battery has also been proposed in the related art. The conductive release adhesive is a special material that has a certain adhesiveness when not energized and can firmly bond the battery to the battery compartment. When the battery is required to be separated, an external power supply may be applied between two surfaces of the conductive release adhesive to form a potential difference. The potential difference gradually reduces the adhesiveness of the conductive release adhesive and eventually causes the conductive release adhesive to lose its adhesiveness, thereby allowing an operator to easily remove the battery from the battery compartment and reducing the risk of battery damage.

Accordingly, in the solution in which the battery is bonded by means of the conductive release adhesive, it is necessary to provide conductive layers on two sides of the conductive release adhesive, and the external power supply is connected to the conductive layers to form the potential difference. Therefore, the conductive layers and the conductive release adhesive form a complex stacked structure, increasing the overall thickness of the battery assembly. In addition, during battery replacement and maintenance, the operator is required to peel the conductive layer from the stacked structure before connection with the external power supply, which also affects the efficiency of battery replacement and maintenance.

In view of this, the present application provides a battery assembly. By optimizing the stacked structure outside the battery, the battery assembly can be ensured to have a small thickness while facilitating the connection between an external power supply and a conductive layer.

The battery assembly provided in the embodiments of the present application will be described below with reference to the accompanying drawings. It should be noted that the battery provided in the embodiments of the present application may be a secondary battery. That is, the battery in the embodiments of the present application can be charged, discharged, and used cyclically. Specific types of the battery may include, but are not limited to, a lithium battery and the like. Application scenarios of the battery may include, but are not limited to, electronic products, such as mobile phones and tablet computers, which are not specifically limited in the embodiments of the present application.

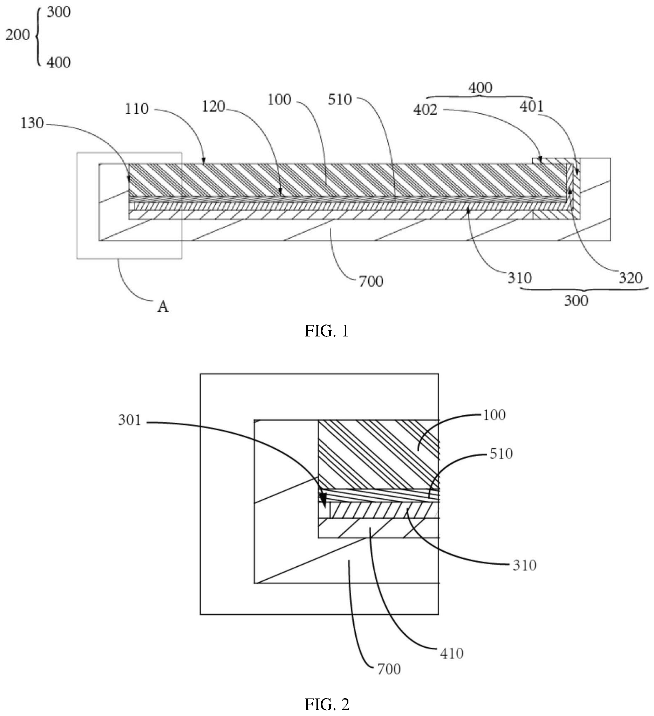

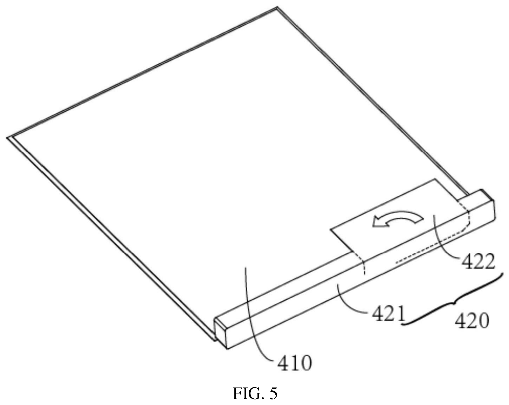

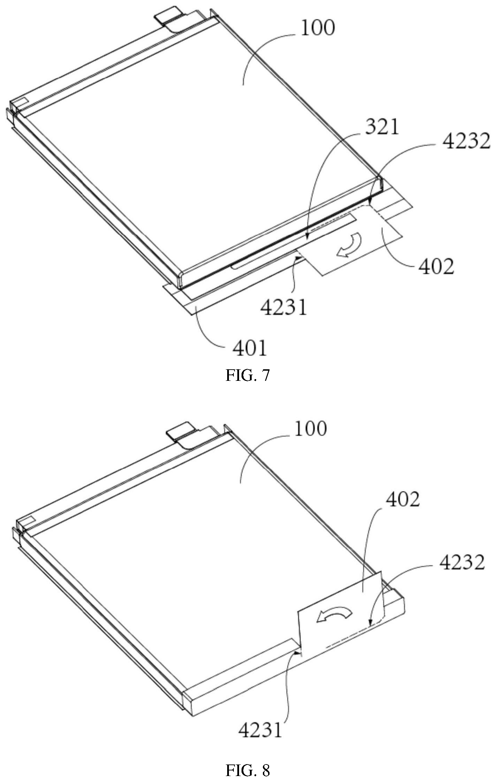

As shown in FIGS. 1 to 7 and FIG. 11, the battery assembly provided in the embodiment of the present application includes: a battery 100 and a separation structure 200.

The battery 100 includes a top surface 110, a bottom surface 120, and a plurality of side surfaces 130 located between the top surface 110 and the bottom surface 120.

The separation structure 200 is wrapped around an outer side of the battery 100, and the separation structure 200 includes a first conductive layer 300 and an insulating separation layer 400. Specifically, the first conductive layer 300 covers at least part of the bottom surface 120 of the battery 100 and at least part of the side surfaces 130 of the battery 100. The insulating separation layer 400 includes a separation main body portion 401 and a pulling portion 402 connected to the separation main body portion 401. The separation main body portion 401 covers the first conductive layer 300 and is connected to the first conductive layer 300, and the pulling portion 402 is bonded to the top surface 110 of the battery 100. The pulling portion 402 is configured such that, when a pulling force is applied to the pulling portion 402, the pulling portion 402 is separated from the top surface of the battery 100, and the first conductive layer 300 on the side surfaces 130 of the battery 100 is separated from the battery 100. At least part of the insulating separation layer 400 is formed of a conductive release adhesive 410.

By applying the technical solution of the present embodiment, the separation structure 200, which is wrapped around the outer side of the battery 100, can protect the battery 100, and can also serve to connect the battery to the battery compartment. The separation structure 200 includes a first conductive layer 300 and an insulating separation layer 400. When the battery compartment 700 of the electrical apparatus is made of a conductive material, the insulating separation layer 400 can electrically insulate the first conductive layer 300 from the battery compartment 700, so as to ensure that a potential difference is formed between two sides of the conductive release adhesive 410 by the external power supply 800.

The first conductive layer 300 covers at least part of the bottom surface 120 and at least part of the side surfaces 130 of the battery 100, and the insulating separation layer 400 includes a separation main body portion 401 and a pulling portion 402 connected to the separation main body portion 401. The separation main body portion 401 can cover the first conductive layer 300. That is, the separation main body portion 401 can cover the first conductive layer 300 located on the bottom surface 120 of the battery and the first conductive layer 300 located on the side surfaces 130 of the battery. The pulling portion 402 can be bonded to the top surface of the battery 100. Since the pulling portion 402 is connected to the separation main body portion 401 (for example, the pulling portion 402 is connected to the separation main body portion 401 via a tear guide structure), when a pulling force is applied to the pulling portion 402, the pulling portion 402 is separated from the top surface of the battery 100 first. As the pulling force continues to be applied, the pulling portion 402 can be peeled off from the side surfaces of the battery, thereby separating the first conductive layer 300 on the side surfaces 130 of the battery 100 from the battery 100. In this case, a connecting terminal of the external power supply 800 can extend into the space between the first conductive layer 300 and the battery 100, so as to be in contact with the first conductive layer 300, thereby achieving electrical conduction between the external power supply 800 and the first conductive layer 300. Moreover, the other terminal of the external power supply 800 can be connected to the conductive battery compartment 700. Since the insulating separation layer 400 is located between the first conductive layer 300 and the battery compartment 700, and at least part of the insulating separation layer 400 is formed of the conductive release adhesive 410, a potential difference can be generated between two sides of the conductive release adhesive 410, thereby causing the conductive release adhesive 410 to lose its adhesiveness. An operator can remove the battery 100 with the first conductive layer 300 from the battery compartment 700. Even if the first conductive layer 300 is damaged, the structure of the battery 100 will not be affected, thereby ensuring the integrity of the battery 100.

Moreover, the first conductive layer 300 only covers the bottom surface and the side surfaces of the battery, and does not cover the top surface of the battery. Therefore, the overall thickness of the battery assembly is reduced, thereby ensuring miniaturization design of the battery assembly.

It should be noted that the conductive release adhesive 410 includes a first conductive release adhesive layer, a non-woven fabric, and a second conductive release adhesive layer that are stacked. In the present application, a conductive release adhesive that loses its adhesiveness on a low-potential side upon energization may be selected, or a conductive release adhesive that loses its adhesiveness on a high-potential side upon energization may be selected, or a conductive release adhesive that completely loses its adhesiveness upon energization may be selected.

To further improve the convenience of connection between the external power supply 800 and the first conductive layer 300, a tear guide structure 423 may be provided between the separation main body portion 401 and the pulling portion 402, such that when a pulling force is applied to the pulling portion 402, the pulling portion can be separated from the separation main body portion 401 along the tear guide structure 423, thereby driving the first conductive layer 300 bonded to the pulling portion 402 to be exposed from a gap between the battery 100 and the battery compartment 700, thereby facilitating the contact between the connecting terminal of the external power supply 800 and the first conductive layer 300.

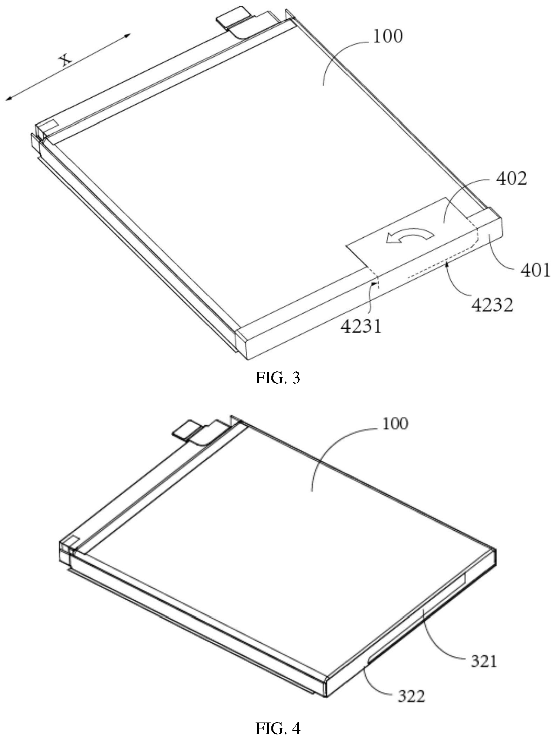

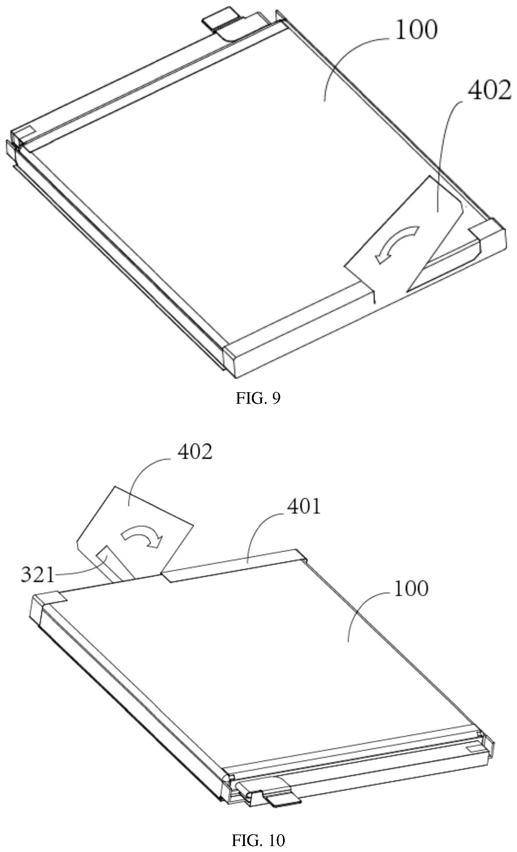

Specifically, as shown in FIG. 3 and FIGS. 6 to 10, in some embodiments, a tear guide structure 423 is provided between the separation main body portion 401 and the pulling portion 402. The pulling portion 402 is configured such that, when a pulling force is applied to the pulling portion 402, the pulling portion 402 is separated from the separation main body portion 401 along the tear guide structure 423, and the first conductive layer 300 located on the side surfaces 130 of the battery 100 is exposed at the top surface 110 of the battery 100. With such an arrangement, a rapid connection between the connecting terminal of the external power supply 800 and the first conductive layer 300 can be achieved.

The specific arrangement of the tear guide structure will be described below with reference to the accompanying drawings.

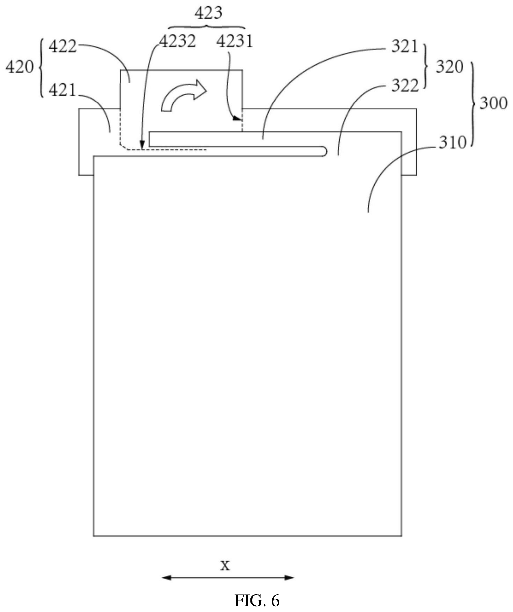

As shown in FIG. 3 and FIGS. 6 to 10, in some embodiments, the pulling portion 402 includes a first edge and a second edge disposed opposite to each other in a first direction (a width direction of the battery 100, i.e., an x-direction in FIG. 6). The tear guide structure 423 includes a first tear guide portion 4231 and a second tear guide portion 4232. A first end of the first tear guide portion 4231 is located at the first edge, and a second end of the first tear guide portion 4231 extends to a respective side surface 130 of the battery 100. A first end of the second tear guide portion 4232 is located at the second edge, and a second end of the second tear guide portion 4232 extends to a respective side surface of the battery 100.

When a pulling force is applied to the pulling portion 402, the pulling portion 402 is separated from the separation main body portion 401 along the first tear guide portion 4231 and the second tear guide portion 4232 first. When the first tear guide portion 4231 and the second tear guide portion 4232 are torn to the side surface 130 of the battery 100, the pulling portion 402 enables the first conductive layer 300 to be separated from the side surface 130 of the battery 100, thereby facilitating the connection between the connecting terminal of the external power supply 800 and the first conductive layer 300.

Further, as shown in FIG. 6, the second end of the second tear guide portion 4232 extends toward the second end of the first tear guide portion 4231 and is spaced apart from the second end of the first tear guide portion 4231.

When the first tear guide portion 4231 and the second tear guide portion 4232 are torn to the side surface 130 of the battery 100, the direction of the pulling force is changed, and the second edge of the pulling portion 402 is pulled upward. This causes the second end of the second tear guide portion 4232 to be torn toward the second end of the first tear guide portion 4231, thereby twisting the pulling portion 402. At this point, the pulling portion 402 enables the first conductive layer 300 to extend from the top surface 110 of the battery 100, facilitating the connection between the connecting terminal of the external power supply 800 and the first conductive layer 300.

Specifically, the second tear guide portion 4232 includes a first tear segment parallel to the first tear guide portion 4231, and a second tear segment arranged at an angle to the first tear segment. The second tear segment extends toward the second end of the first tear guide portion 4231, such that when a pulling force is applied to the pulling portion 402, the second tear guide portion is torn, and the pulling portion 402 is twisted.

It should be noted that, in some embodiments, the tear guide structure 423 includes a tear line (not shown), and the structural strength of the insulating separation layer 400 at the tear line is less than the structural strength of the insulating separation layer 400 outside the tear line. In the above structure, the tear line may be a perforated line, which has a simple structure and is easy to manufacture. The tear line can define a path along which the pulling portion 402 is separated from the separation main body portion 401, thereby guiding the tearing of the pulling portion 402.

The specific structure of the first conductive layer will be described below with reference to the accompanying drawings.

As shown in FIGS. 6, 7, and 10, in some embodiments, the first conductive layer 300 includes a first main conductive portion 310 and a first extended conductive portion 320. The first main conductive portion 310 covers at least part of the bottom surface 120 of the battery 100 and is bonded to the bottom surface 120 of the battery via a first adhesive layer 510. The first extended conductive portion 320 is located on the side surfaces 130 of the battery 100 and does not extend to the top surface 110 of the battery, thereby preventing an increase in the overall thickness of the battery assembly and facilitating the connection between the first conductive layer 300 and an external power supply while ensuring miniaturization of the battery assembly.

It should further be noted that the first extended conductive portion 320 includes a first extended strip 321 and a first connecting portion 322 for connecting the first extended strip 321 to the first main conductive portion 310. A length of the first connecting portion 322 in the first direction is smaller than a length of the first extended strip 321 in the first direction, and the pulling portion 402 is arranged at an end of the first extended strip 321 away from the first connecting portion 322.

In the above structure, a top surface of the first main conductive portion 310 can be connected to the bottom surface of the battery 100, and a bottom surface of the first main conductive portion 310 can be connected to the battery compartment via the conductive release adhesive 410, thereby achieving the effect of connecting the battery 100 within the battery compartment 700. The first extended conductive portion 320 includes the first extended strip 321 and the first connecting portion 322, and the first extended strip 321 is connected to the first main conductive portion 310 via the first connecting portion 322. Since the length of the first connecting portion 322 in the first direction is smaller than the length of the first extended strip 321 in the first direction, the end of the first extended strip 321 away from the first connecting portion 322 forms a free end. The free end of the first extended strip 321 can move along with the pulling portion 402, such that the first extended strip 321 is exposed at the top surface 110 of the battery, thereby facilitating the connection between the external power supply 800 and the first conductive layer 300.

Specifically, when a pulling force is applied to the pulling portion 402, the pulling portion 402 is separated from the separation main body portion 401 along the first tear guide portion 4231 and the second tear guide portion 4232 first. When the first tear guide portion 4231 and the second tear guide portion 4232 are torn to the side surface 130 of the battery 100, the direction of the pulling force is changed, and the second edge of the pulling portion 402 is pulled upward. This causes the second end of the second tear guide portion 4232 to be torn toward the second end of the first tear guide portion 4231, thereby twisting the pulling portion 402. At this point, the pulling portion 402 can pull the first extended strip 321 away from the side surface 130 of the battery and extend the first extended strip outward to the top surface 110 of the battery, thereby exposing the first extended strip 321 at the top surface 110 of the battery, and thus facilitating the connection between the connecting terminal of the external power supply 800 and the first conductive layer 300.

It should be noted that the first conductive layer 300 may be a conductive metal sheet. The conductive metal sheet has a small thickness, occupies little space, and has good ductility, allowing it to be easily bent. Therefore, the conductive metal sheet can be used to manufacture the first conductive layer 300. By way of example, the first conductive layer 300 may be an aluminum foil.

The specific structure of the insulating separation layer will be described below with reference to the accompanying drawings.

As shown in FIGS. 1, 5 and 6, and FIGS. 8 to 10, in some embodiments, the insulating separation layer 400 further includes an insulating protective layer 420. The insulating protective layer 420 and the conductive release adhesive 410 are connected to each other and jointly form the insulating separation layer 400. The connection between the conductive release adhesive 410 and the insulating protective layer 420 is located on the bottom surface 120 of the battery 100. The insulating protective layer 420 includes an insulating protective main body portion 421 and a pull tab 422 arranged on the insulating protective main body portion 421. The insulating protective main body portion 421 and the pull tab 422 are connected via the tear guide structure 423. The pull tab 422 forms the pulling portion 402 of the insulating separation layer 400, and the insulating protective main body portion 421 and the conductive release adhesive 410 form the separation main body portion 401.

In the above structure, the insulating protective layer 420 can protect the battery 100, insulate the first conductive layer 300 from the battery compartment 700, and reduce the application area of the conductive release adhesive 410. Specifically, since the conductive release adhesive 410 is intended to bond the first conductive layer 300 and the battery compartment, the coating area of the conductive release adhesive 410 only needs to meet the bonding requirement, and an excessive part may be supplemented by the insulating protective layer 420, thereby shortening the electrolysis time of the conductive release adhesive 410 and lowering the cost of the battery assembly.

Specifically, the insulating protective layer 420 may be an insulating adhesive tape bonded to the battery 100. Accordingly, by providing the pulling portion 402 on the insulating protective layer 420, the adhesive property of the insulating adhesive tape can be utilized, such that the pulling portion 402 can drive the first extended strip 321 when torn, thereby enriching the functionality of the insulating protective layer 420.

It should be noted that the insulating protective main body portion 421 is bonded to the side surfaces 130 of the battery 100 and extends from the side surfaces 130 to the top surface 110 and the bottom surface 120, and the pull tab 422 is connected to the insulating protective main body portion 421 and bonded to the top surface 110 of the battery 100 so as to form the pulling portion 402 of the insulating separation layer 400.

As shown in FIGS. 1, 2, 5 and 6, in some embodiments, the conductive release adhesive 410 covers a bottom surface of the first conductive layer 300 and abuts against or overlaps with the insulating protective layer 420 located on the bottom surface. With such an arrangement, the insulation effect between the first conductive layer 300 and the bottom surface of the battery compartment 700 can be ensured.

It should be noted that by "abut against", it is meant that an edge of the insulating protective layer 420 is in contact with an edge of the conductive release adhesive 410, to prevent the first conductive layer 300 from directly contacting the bottom surface of the battery compartment 700 through a gap between the insulating protective layer 420 and the conductive release adhesive 410.

It should be further noted that, by "overlap with", it is meant that the edge of the insulating protective layer 420 and the edge of the conductive release adhesive 410 have an overlapping portion in the thickness direction of the battery 100, to prevent the first conductive layer 300 from directly contacting the bottom surface of the battery compartment 700. By way of example, the width of the overlapping portion may be less than 2 mm.

Further, as shown in FIG. 2, in some embodiments, the battery 100 includes a plurality of edges, and the first main conductive portion 310 is provided with a plurality of edges corresponding to the edges of the battery 100. The area of the first main conductive portion 310 is smaller than the area of the bottom surface 120 of the battery 100, and a gap 301 is provided between each edge of the first main conductive portion 310 and a corresponding edge of the battery 100.

In the above structure, due to the design of the gap 301, the edges of the first conductive layer 300 cannot contact a wall of the battery compartment, thereby ensuring the insulation effect between the first conductive layer 300 and the battery compartment 700.

It should be noted that such an arrangement may cause an edge of the conductive release adhesive 410 to extend beyond an edge of the first conductive layer 300, such that the excess portion of the conductive release adhesive 410 cannot be effectively electrolyzed and retains its adhesiveness. However, relative to the entire conductive release adhesive 410, the area of the non-electrolyzed portion of the conductive release adhesive 410 is small, and the battery 100 can be removed with a small pulling force.

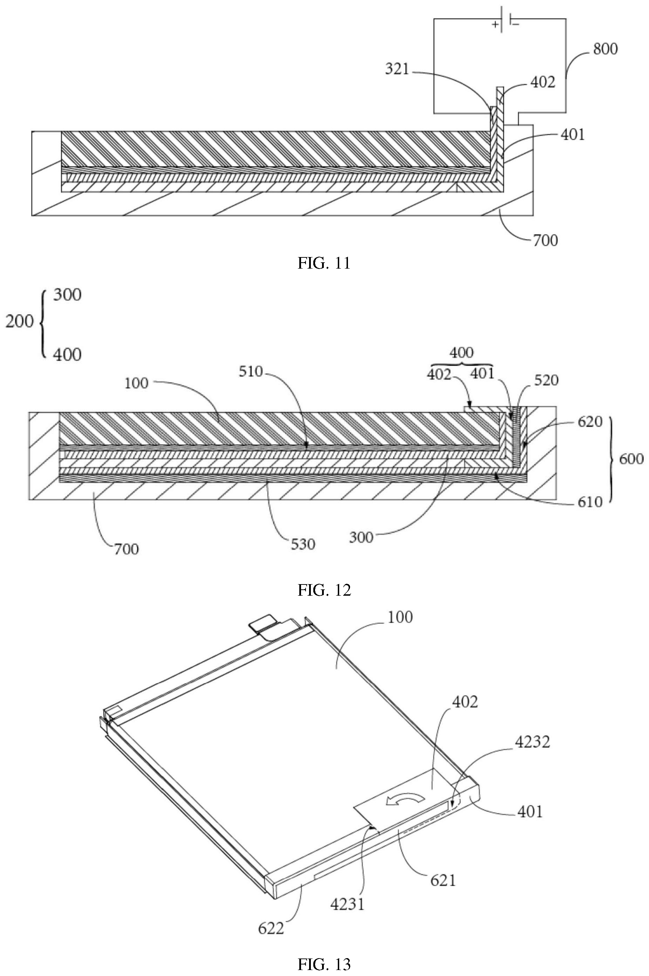

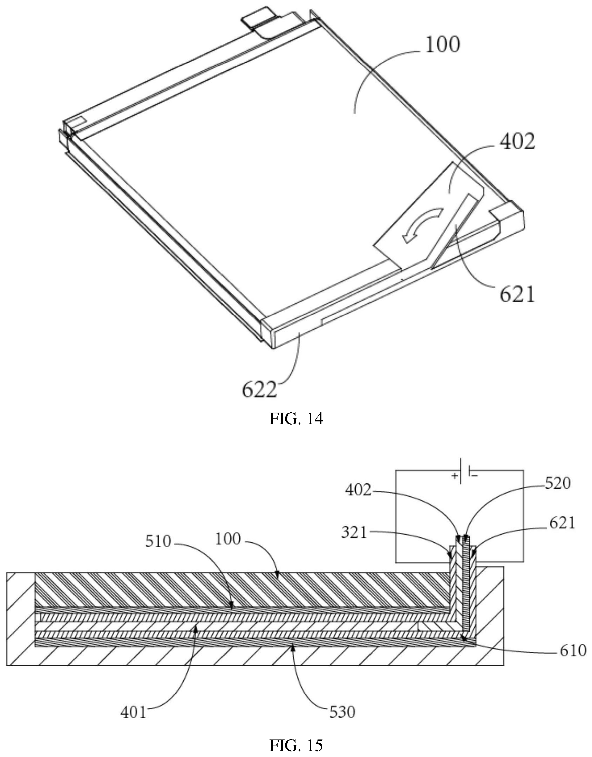

In some cases, the battery compartment 700 of the electrical apparatus is made of an insulating material. To adapt to the battery compartment 700 made of the insulating material, as shown in FIGS. 12 to 15, in some embodiments, the separation structure 200 further includes a second conductive layer 600. The second conductive layer 600 covers the insulating separation layer 400 located on the bottom surface 120 of the battery 100 and the insulating separation layer 400 located on the side surfaces 130 of the battery 100.

As shown in FIGS. 12 to 15, the second conductive layer 600 includes a second main conductive portion 610 and a second extended conductive portion 620. The second main conductive portion 610 covers the insulating separation layer 400 located on the bottom surface 120 of the battery 100, and the second extended conductive portion 620 covers the insulating separation layer 400 located on the side surfaces 130 of the battery 100. The second extended conductive portion 620 includes a second extended strip 621 and a second connecting portion 622 for connecting the second extended strip 621 to the second main conductive portion 610. A length of the second connecting portion 622 in the first direction is smaller than a length of the second extended strip 621 in the first direction. The pulling portion 402 and the second connecting portion 622 are staggered in the first direction, and the pulling portion 402 is bonded to the second extended strip 621 via a second adhesive layer 520.

In the above structure, the insulating separation layer 400 is substantially located between the first conductive layer 300 and the second conductive layer 600. The first conductive layer 300 can be bonded to the battery 100, and the second conductive layer 600 can be bonded to the battery compartment 700, while the insulating separation layer 400 including the conductive release adhesive 410 is provided between the first conductive layer 300 and the second conductive layer 600. Accordingly, positive and negative terminals of the external power supply 800 may be respectively connected to the first conductive layer 300 and the second conductive layer 600, such that a potential difference is formed between two sides of the conductive release adhesive 410, thereby causing the conductive release adhesive 410 to lose its adhesiveness with respect to the first conductive layer 300 and the second conductive layer 600, and the battery 100 can be readily removed from the battery compartment 700.

Further, the first conductive layer 300 and the second conductive layer 600 have similar structures. However, since the second conductive layer 600 is located on an outer side of the insulating separation layer 400, and the first conductive layer 300 is located on an inner side of the insulating separation layer 400, the size of the second conductive layer 600 is greater than the size of the first conductive layer 300.

The second conductive layer 600 includes a second main conductive portion 610 and a second extended conductive portion 620. The second main conductive portion 610 covers the insulating separation layer 400 located on the bottom surface 120 of the battery 100, and the second extended conductive portion 620 covers the insulating separation layer 400 located on the side surfaces 130 of the battery 100. That is, the inner side of the insulating separation layer 400 is bonded to the first extended conductive portion 320, and the outer side of the insulating separation layer 400 is bonded to the second extended conductive portion 620. Specifically, the pulling portion 402 of the insulating separation layer 400 may be bonded to both the first extended strip 321 and the second extended strip 621, such that when the pulling portion 402 is pulled out, the first extended strip 321 and the second extended strip 621 are both taken out from a gap between the battery 100 and the battery compartment 700, thereby enabling two connecting terminals of the external power supply 800 to be respectively connected to the first extended strip 321 and the second extended strip 621, so as to achieve release of the conductive release adhesive 410.

As shown in FIG. 1, the present application further provides an electrical apparatus, including a battery compartment 700 and a battery assembly disposed in the battery compartment 700. The battery assembly is a battery assembly described above, and the battery compartment 700 is made of a conductive material. The first conductive layer 300 of the battery assembly is disposed between the insulating separation layer 400 and the battery compartment 700.

In the above structure, when the battery compartment 700 of the electrical apparatus is made of a conductive material, the battery assembly includes only one conductive layer. That is, the battery assembly includes only the first conductive layer 300. The first conductive layer 300 and the conductive battery compartment 700 together form conductive members connected to positive and negative terminals of the external power supply 800, thereby forming a potential difference between two sides of the conductive release adhesive 410, so as to eliminate the adhesiveness of the conductive release adhesive 410 and allow the battery 100 to be removed.

As shown in FIG. 12, the present application further provides an electrical apparatus, including a battery compartment 700 and a battery assembly disposed in the battery compartment 700. The battery assembly is a battery assembly described above, and the battery compartment 700 is made of an insulating material. A third adhesive layer 530 is provided between the second conductive layer 600 of the battery assembly and the battery compartment 700.

In the above structure, when the battery compartment 700 of the electrical apparatus is made of an insulating material, it is necessary for the battery assembly to include two conductive layers. That is, the battery assembly includes a first conductive layer 300 and a second conductive layer 600. The insulating separation layer including the conductive release adhesive 410 is provided between the first conductive layer 300 and the second conductive layer 600. Therefore, the positive and negative terminals of the external power supply 800 may be respectively connected to the first conductive layer 300 and the second conductive layer 600, such that a potential difference is formed between two sides of the conductive release adhesive 410, thereby causing the first conductive layer 300 and the second conductive layer 600 to lose their adhesiveness, and the battery 100 can be readily removed from the battery compartment 700.

In the description of the present application, it should be noted that, unless expressly stated and defined otherwise, the terms "mounted", "connected", and "connection" should be understood in a broad sense, for example, it may be a fixed connection, or an indirect connection through an intermediate medium, and may be the communication between the interiors of two elements or the interaction between two elements. For those of ordinary skill in the art, the specific meaning of the terms mentioned above in the present application should be construed according to specific circumstances.

In the description of the embodiments of the present application, it should be understood that orientation or position relationships indicated by the terms such as "up", "down", "front", "rear", "left", "right", "vertical", "horizontal", "top", "bottom", "inside", and "outside" are based on orientation or position relationships shown in the accompanying drawings and are merely for ease of description of the present application and simplification of the description, rather than indicating or implying that the apparatuses or elements referred to must have a specific orientation or be constructed and operated in a specific orientation, and therefore cannot be construed as limiting the present application.

The terms "first", "second", "third", "fourth", etc. (if any) in the description, claims and the above accompanying drawings of the present application are used for distinguishing similar objects, but are not intended to indicate any particular order or sequence. It should be understood that the data used in this way may be interchanged where appropriate, so that the embodiments of the present application described herein can be implemented in an order other than those illustrated or described herein.

In addition, the terms "include", "have" and any variation thereof are intended to cover a non-exclusive inclusion, for example, a process, method, system, product, or device that includes a series of steps or units is not necessarily limited to those steps or units that are explicitly listed, but may include other steps or units not explicitly listed or inherent to such a process, method, product or device.

It should be finally noted that the above embodiments are merely used for illustrating rather than limiting the technical solutions of the present application; although the present application has been described in detail with reference to the foregoing embodiments, those of ordinary skill in the art should understand that modifications may still be made to the technical solutions described in the foregoing embodiments, or equivalent substitutions may be made to some or all of the technical features thereof; such modifications or substitutions do not depart from the scope of the technical solutions of the embodiments of the present application.

## Claims

1. A battery assembly, comprising:
a battery, comprising a top surface, a bottom surface, and a plurality of side surfaces located between the top surface and the bottom surface; and
a separation structure wrapped around an outer side of the battery, the separation structure comprising a first conductive layer and an insulating separation layer,
wherein the first conductive layer covers at least part of the bottom surface of the battery and at least part of the side surfaces of the battery;
the insulating separation layer comprises a separation main body portion and a pulling portion connected to the separation main body portion, the separation main body portion covering the first conductive layer and being connected to the first conductive layer, and the pulling portion being bonded to an upper surface of the battery; and
the pulling portion is configured such that, when a pulling force is applied to the pulling portion, the pulling portion is separated from the top surface of the battery, and the first conductive layer on the side surfaces of the battery is separated from the battery,
wherein at least part of the insulating separation layer is formed of a conductive release adhesive.

2. The battery assembly according to claim 1, wherein a tear guide structure is provided between the separation main body portion and the pulling portion, the pulling portion being configured such that, when a pulling force is applied to the pulling portion, the pulling portion is separated from the separation main body portion along the tear guide structure, and the first conductive layer located on the side surfaces of the battery is exposed at the top surface of the battery.

3. The battery assembly according to claim 2, wherein the pulling portion comprises a first edge and a second edge disposed opposite to each other in a first direction, and the tear guide structure comprises a first tear guide portion and a second tear guide portion; a first end of the first tear guide portion is located at the first edge, and a second end of the first tear guide portion extends to a respective side surface of the battery; and a first end of the second tear guide portion is located at the second edge, and a second end of the second tear guide portion extends to a respective side surface of the battery.

4. The battery assembly according to claim 3, wherein the second end of the second tear guide portion extends toward the second end of the first tear guide portion and is spaced apart from the second end of the first tear guide portion,
wherein the first direction is a width direction of the battery.

5. The battery assembly according to claim 4, wherein the tear guide structure comprises a tear line, and the structural strength of the insulating separation layer at the tear line is less than the structural strength of the insulating separation layer outside the tear line.

6. The battery assembly according to claim 4, wherein the first conductive layer comprises a first main conductive portion and a first extended conductive portion, the first main conductive portion covering at least part of the bottom surface of the battery, and the first extended conductive portion being located at the side surfaces of the battery.

7. The battery assembly according to claim 6, wherein the first extended conductive portion comprises a first extended strip and a first connecting portion for connecting the first extended strip to the first main conductive portion, a length of the first connecting portion in the first direction is smaller than a length of the first extended strip in the first direction, and the pulling portion is arranged at an end of the first extended strip away from the first connecting portion.

8. The battery assembly according to any one of claims 4 to 6, wherein the insulating separation layer further comprises an insulating protective layer; the insulating protective layer and the conductive release adhesive are connected to each other and jointly form the insulating separation layer; the connection between the conductive release adhesive and the insulating protective layer is located on the bottom surface of the battery; the insulating protective layer comprises an insulating protective main body portion and a pull tab arranged on the insulating protective main body portion; and the insulating protective main body portion and the pull tab are connected via the tear guide structure, the pull tab forms the pulling portion of the insulating separation layer, and the insulating protective main body portion and the conductive release adhesive form the separation main body portion.

9. The battery assembly according to claim 8, wherein the conductive release adhesive covers a bottom surface of the first conductive layer and abuts against or overlaps with the insulating protective layer located on the bottom surface.

10. The battery assembly according to any one of claims 6 to 9, wherein the battery comprises a plurality of edges, the first main conductive portion is provided with a plurality of edges corresponding to the edges of the battery, the area of the first main conductive portion is smaller than the bottom area of the battery, and a gap is provided between each edge of the first main conductive portion and a corresponding edge of the battery.

11. The battery assembly according to any one of claims 1 to 10, wherein the first conductive layer is a metal sheet.

12. The battery assembly according to any one of claims 1 to 11, wherein the separation structure further comprises a second conductive layer, the second conductive layer covering the insulating separation layer located on the bottom surface of the battery and the insulating separation layer located on the side surfaces of the battery.

13. The battery assembly according to claim 12, wherein the second conductive layer comprises a second main conductive portion and a second extended conductive portion; the second main conductive portion covers the insulating separation layer located on the bottom surface of the battery, and the second extended conductive portion covers the insulating separation layer located on the side surfaces of the battery; and
the second extended conductive portion comprises a second extended strip and a second connecting portion for connecting the second extended strip to the second main conductive portion, a length of the second connecting portion in a first direction is smaller than a length of the second extended strip in the first direction, the pulling portion and the second connecting portion are staggered in the first direction, and the pulling portion is bonded to the second extended strip,
wherein the first direction is a width direction of the battery.

14. An electrical apparatus, comprising a battery compartment and a battery assembly arranged in the battery compartment, wherein the battery assembly is a battery assembly according to any one of claims 1 to 11,
wherein the battery compartment is made of a conductive material, and the first conductive layer of the battery assembly is arranged between the insulating separation layer and the battery compartment.

15. An electrical apparatus, comprising a battery compartment and a battery assembly arranged in the battery compartment, wherein the battery assembly is a battery assembly according to claim 12 or 13,
wherein the battery compartment is made of an insulating material, and a third adhesive layer is provided between the second conductive layer of the battery assembly and the battery compartment.
